# EUROPEAN PATENT APPLICATION

(11) **EP 3 088 127 A1**
(43) Date of publication of application: **02.11.2016**
(21) Application number: 15165656.8
(22) Date of filing: 29.04.2015
(51) Int. Cl.: B23K 37/02, B23K 37/04, B23K 31/02, F16K 51/02, F16K 3/00, B23K 101/12, B23K 101/36

(54) **WELDING STRUCTURE OF VACUUM VALVE WITH AN INTERNAL WELD SEAM AND METHOD AND APPARATUS THEREOF**

(71) Applicant: King Lai Hygienic Materials Co., Ltd., 30264 Zhubei City, Hsinchu County (TW)
(72) Inventor: Lee, Shui-Po, 30264 Zhubei City, Hsinchu County (TW)
(74) Representative: Viering, Jentschura & Partner mbB Patent- und Rechtsanwälte

(57) **Abstract**

A welding structure of vacuum valve (300) includes a first plate (201), a second plate (202), and a cover plate (203). The second plate (202) has two lateral edges contacting and fixed with two laterals edges of the first plate (201) by internal welding, such that an internal weld bead (204) is formed at the inner edges of the second plate (202) and the first plate (201) contacting each other, respectively. The cover plate (203) is welded to one end of the first plate (201) and one end of the second plate (202). With the internal welding (seam 204), the valve body (300) of a vacuum valve is fully welded, so as to prevent the structure of the valve body (300) from being damaged, achieving an actual vacuum environment.

## Description

### BACKGROUND OF THE INVENTION

### 1. Field of the Invention:

The present invention relates to welding structure of vacuum valve and method and apparatus thereof, and more particularly, to an internally welding method for fully and internally welding an object without usage of solder, so as to produce a valve body of a vacuum valve.

### 2. Description of the Related Art:

Nowadays, most vacuum valve is in a hollowed, flat, and long shape, such that internal welding thereof is uneasy to be practiced. As a result, internal welding is substituted by external welding for facilitating the welding convenience. Usually, the valve body is welded by externally penetration welding, wherein solder penetrates into the gap of the valve body during the welding process, thereby fully filling the gap in order to seal the valve body, achieving an actual vacuumed environment in the valve body.

However, technical skill of each welding matters during the external welding process. Also, in the penetration welding, two connecting parts of the valve body are liquated, and the solder is subsequently filled therein. During such process, connecting parts of the valve body slightly deform, so as to damage the structure of the valve body, while tiny gaps possibly appear. Once tiny gaps appear, the valve body is prevented from having an actual vacuum status, and service life of the product is thereby shortened.

### SUMMARY OF THE INVENTION

For improving the aforementioned issues, the present invention discloses a welding structure of vacuum valve and method and apparatus thereof, wherein the internal welding process prevents the valve structure from the damaged, such that the actual vacuum status of the valve body is realized.

For achieving the aforementioned objectives, the present invention provides a welding structure of vacuum valve, comprising:
a first plate;
a second plate, having two lateral edges contacting and fixed with two laterals edges of the first plate by internal welding, such that an internal weld bead is formed at the inner edges of the second plate and the first plate contacting each other, respectively; and
a cover plate, welded to one end of the first plate and one end of the second plate.

For achieving the aforementioned objectives, the present invention further provides a welding method of vacuum valve, comprising following steps:
a) providing a first plate and a second plate, and welding a cover plate between one end of the first plate and one end of the second plate to form a hollow object to be welded;
b) placing the object to be welded on a moving seat, which reciprocates against a welding gun; and
c) moving the moving seat toward the welding gun, such that the welding gun is inserted into the object to be welded, so
as to weld the first plate and the second plate along two contacting edges thereof, whereby an internal weld bead is formed on two sides within the object to be welded, respectively, and the object to be welded is thereby welded into a valve body of a vacuum valve.

For achieving the aforementioned objectives, the present invention further provides a welding apparatus of vacuum valve, comprising:
a platform;
an electric welding unit, disposed above the platform and provided with a welding gun;
a moving seat, slidingly disposed on the platform for holding a hollow object to be welded; and
a driving unit, for driving the moving seat to reciprocate against the welding gun, such that the welding gun is allowed to be inserted into the hollow object to be welded for internally welding.

Therefore, the present invention enables the hollow object to be welded to be internally welded during the movement, so as to realize an actual vacuum environment of a valve body of a vacuum valve. Also, the welding process of the present invention does not apply solder, so the depth of the internal weld bead is smaller than the depth of the contacting edges of the object to be welded, such that the valve body is prevented from being deformed to damage the structural strength thereof, achieving an actual vacuum environment of the valve body.

Furthermore, for improving the structural strength and the service life of the valve body of the vacuum valve, plural welding structures with intervals therebewtten are able to be applied at the outer edge of each two contacting edges, so as to form a plurality of external weld beads, wherein the length of each external weld bead is shorter than the length of the internal weld bead.

### BRIEF DESCRIPTION OF THE DRAWINGS

**Fig. 1** is a perspective view of the welding apparatus in accordance with the present invention.
**Fig. 2** is a top view of the welding apparatus in accordance with the present invention.
**Fig. 3** is a perspective view of the welding apparatus in accordance with the present invention with an object to be welded placed on the moving seat thereof.
**Fig. 4** is an exploded view of the object to be welded.
**Fig. 5** is a perspective view of the object to be welded.
**Fig. 6** is a schematic view illustrating the welding gun of the present invention inserted into an object to weld therein.
**Fig. 7** is a schematic view illustrating the internal welding process, wherein an internal weld bead is formed between the first plate and the second plate.
**Fig. 8** is a schematic view illustrating the structures of the internal weld bead and external weld bead of the valve body in accordance with the present invention.

### DETAILED DESCRIPTION OF THE INVENTION

The aforementioned and further advantages and features of the present invention will be understood by reference to the description of the preferred embodiment in conjunction with the accompanying drawings where the components are illustrated based on a proportion for explanation but not subject to the actual component proportion.

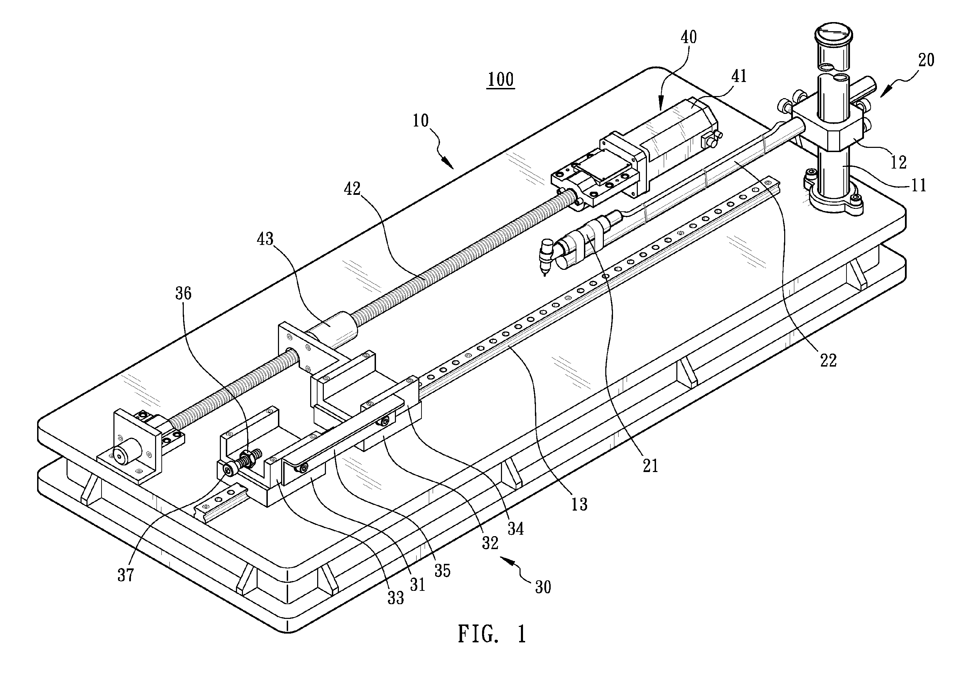

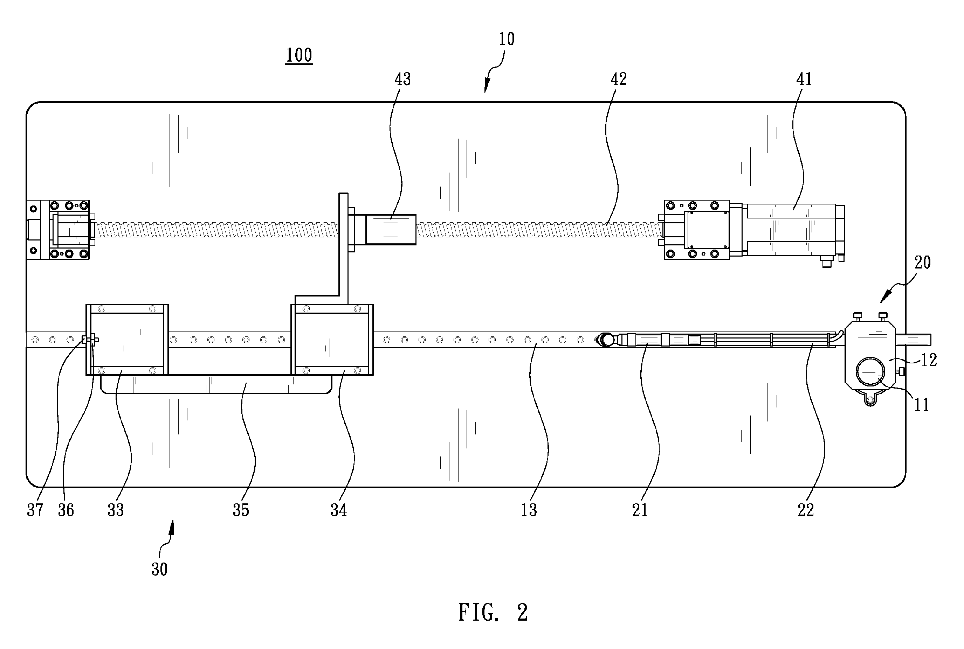

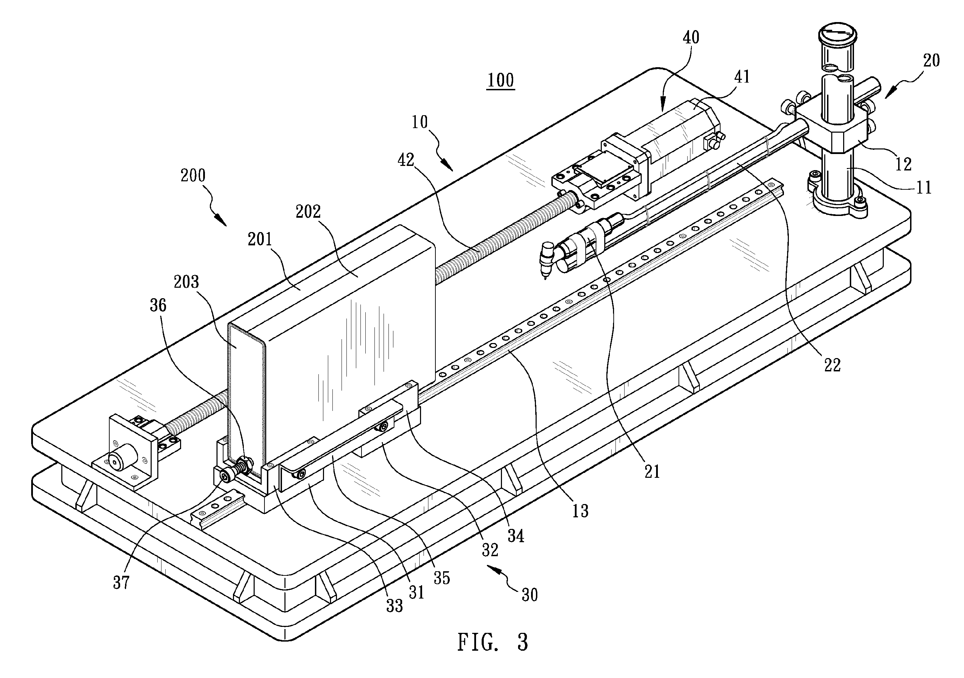

Referring to **Fig. 1** to **Fig. 8****,** the welding apparatus of the present provided by the present invention comprises a platform **10,** an electric welding unit **20,** a moving seat **30,** and a driving unit **40.**

The platform **10** is in a rectangular shape and has a pole **11** disposed on one corner thereof. A fixing seat **12** is mounted on the pole **11,** while the fixing seat **12** is allowed to be mounted by use of screw assemblies, such that position of the fixing seat **12** is axially adjustable along the pole **11.**

The electric welding unit **20** is provided with a welding gun **21** and a rod **22.** One end of the rod **22** is fixedly combined to the fixing seat **12,** with the other end thereof fixed with the welding gun **21,** such that the welding gun **21** is suspended upon the platform **10** and vertical against the pole **11.** With the adjustment of the fixing seat **12,** height of the welding gun **21** is adjusted to facilitate welding processes at different heights.

A rail **13** is disposed on the surface of the platform **10** and parallel positioned against the welding gun **21** under the welding gun **21.**

The moving seat **30** is slidingly disposed on the rail **13.** Preferably, the moving seat **30** comprises a first sliding block 31 and a second sliding block **32,** wherein the first sliding block **31** and the second sliding block **32** are slidingly disposed on the rail **13** with an interval therebetween. The moving seat **30** is further provided with two positioning blocks **33, 34,** which are screwedly disposed on top of the first sliding block **31** and the second sliding block **32,** respectively, with a binding plate **35** fastened between the two positioning blocks **33, 34.** Moreover, the two positioning blocks **33, 34** are in a U shape for receiving a hollow object to be welded **200.**

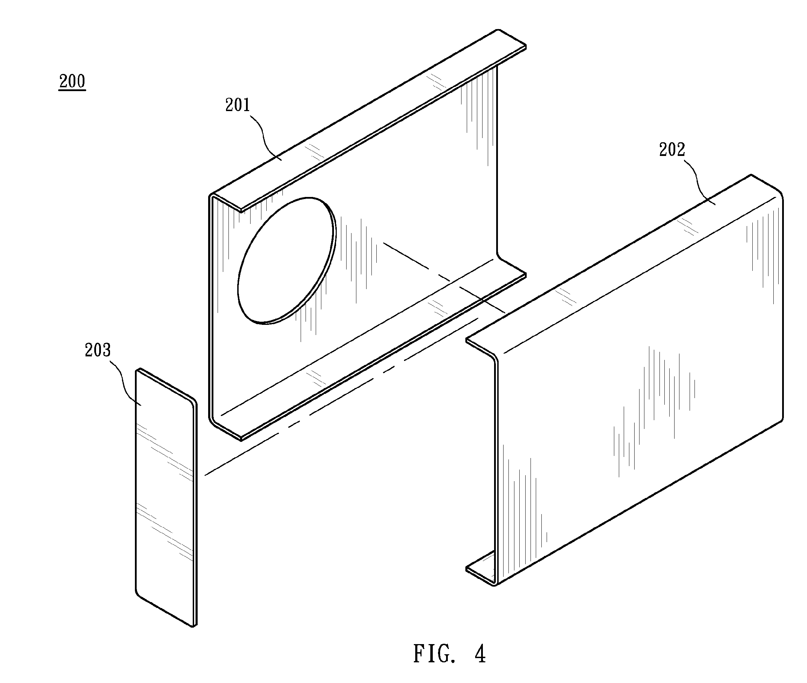

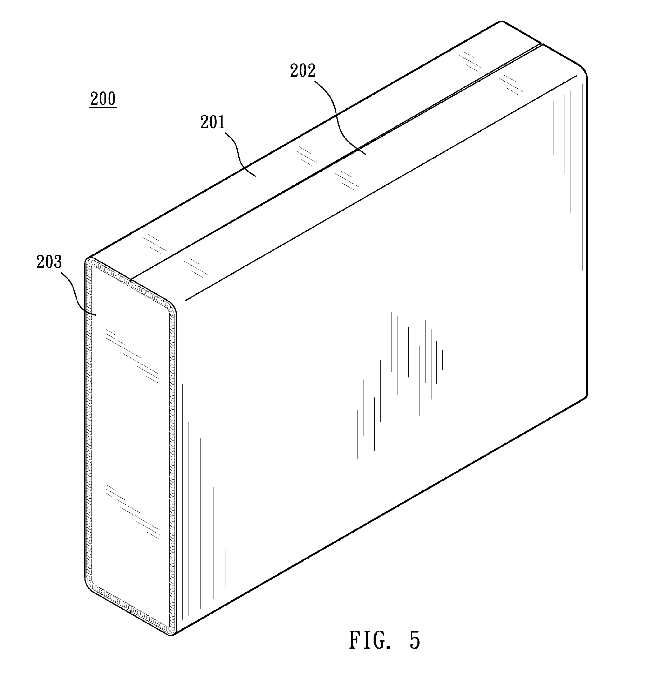

Referring to **Fig. 4** and **Fig. 5****,** the object to be welded **200** is hollow and formed of a first plate **201,** a second plate **202,** which are both in a U shape, and a cover plate **203** welded to one end of the first plate **201** and the second plate **202** in advance, wherein the first plate **201** and the second plate **202** are combined to each other to form a hollow and flat shape, so as to assure a solid structure thereof and facilitate the welding process afterward. The object to be welded **200** is subsequently placed on the moving seat **30.**

The positioning block **33** on one end of the moving seat **30** away from the welding gun **21** has a front edge provided with a nut **36** and a position limiting screw **37** screwed to the nut **36,** such that when the object to be welded **200** is placed on the moving seat **30,** a front edge of the object to be welded **200** is stopped to prevent the object to be welded **200** from moving away from the welding gun **21** during the welding process.

The driving unit **40** drives the moving seat **30** to reciprocate against the welding gun **21,** such that the welding gun **21** is allowed to be inserted into the object to be welded **200** to weld therein. The driving unit **40** comprises a motor **41,** a thread rod **42,** and a combining member **43.** The motor **41** is installed on the platform **10** and positioned on one side of the electric welding unit **20.** The thread rod **42** is coupled with the motor **41** and thus rotates with the motor **41.** The thread rod **42** is on a lateral side of the rail **13** and parallel against the rail **13,** while the combining member **43** is screwedly mounted around the thread rod **42** and connected to the moving seat **30.** Preferably, the combining member **43** is combined to the positioning block **34** which is closer to the welding gun **21** than the positioning block **33**. As a result, when the motor **41** drives the thread rod **42** to rotate, the combining member **43** triggers the moving seat **30** to reciprocate on the rail **13** toward or away from the welding gun **21,** facilitating the welding operation.

Especially, the moving speed of the moving seat **30** of the present invention is relatively slow at a speed ratio of **15-22m**m/min, so that no specific clamping structure is provided to the moving seat **30.** Size of the positioning blocks **33, 34** shall correspondingly match the size of the object to be welded **200.** Regarding other objects to be welded **200** with different sizes, the positioning blocks **33, 34** are screwedly combined to the first sliding block **31** and the second sliding block **32,** such that positioning blocks **33, 34** with different sizes are allowed to be optionally received on the first and second sliding blocks **31, 32** for holding other objects to be welded **200** with different sizes. Also, the distance between the first sliding block **31** and the second sliding block **32** is determined by the length of the object to be welded **200.** When the length of the object to be welded **200** is relatively longer, a binding plate **35** having a longer length is applied, so as to lengthen the distance between the first and second sliding blocks **31, 32,** whereby the object to be welded **200** is stably placed on the moving seat **30.**

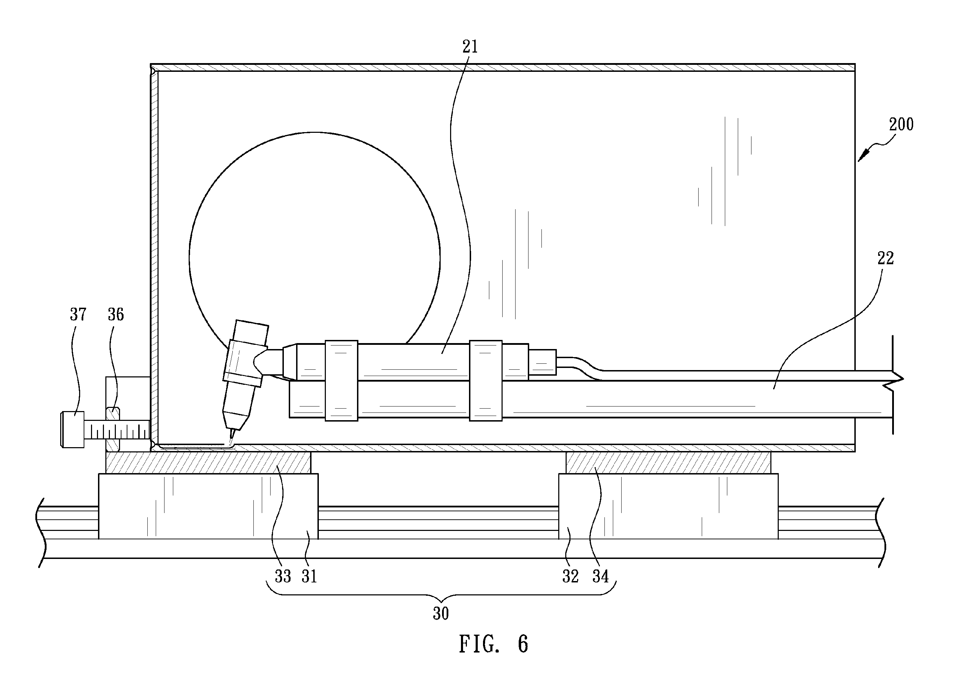

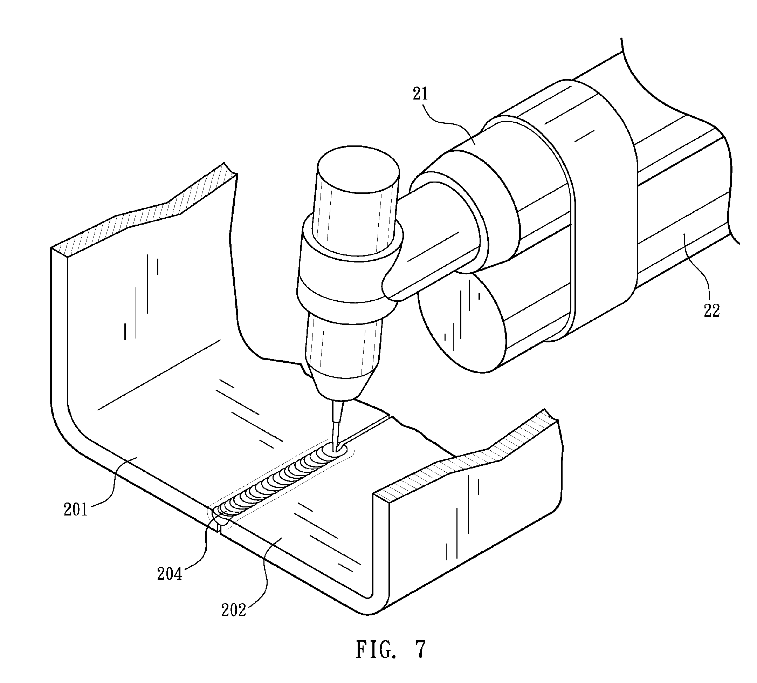

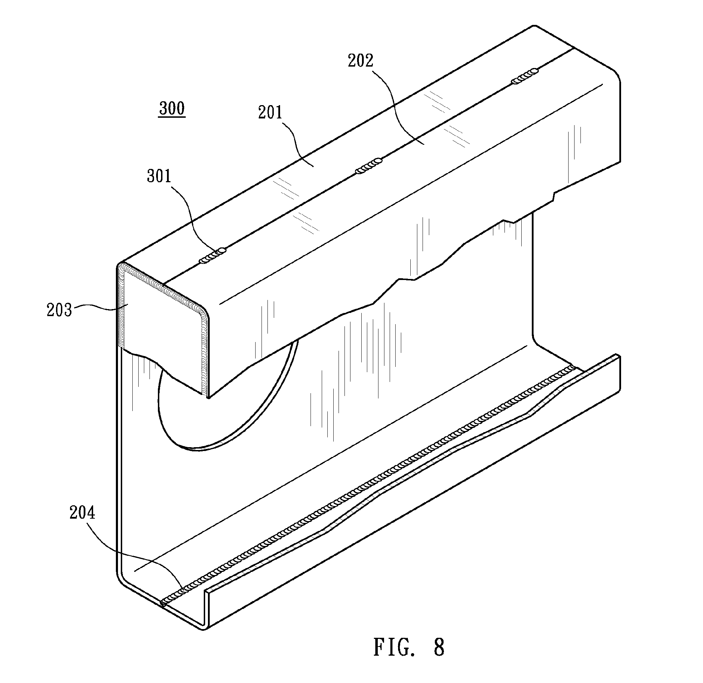

**Fig. 6** and **Fig. 7** are schematic views illustrating the welding operation carried out in accordance with the present invention. First, height of the welding gun **21** is adjusted in advance, so that the moving seat **30** is allowed to carry the object to be welded **200** toward the welding gun **21,** whereby the welding gun **21** is inserted into the object to be welded **200,** so as to internally weld each two contacting edges in a manner of self-fusible welding. Preferably, an internal weld bead **204** is formed on two sides within the object to be welded **200,** whereby the object to be welded **200** is welded into a valve body **300** of a vacuum valve, as shown in **Fig. 8****.**

Due to the fact that no solder is applied in the welding process provided by the present invention, an actual vacuum environment is achieved in the valve body; also, depth of the internal weld bead **204** is smaller than the depth of the contacting edges of the object to be welded **200,** so as to prevent the valve body **300** from deforming to damage the structural strength thereof. In addition, because the depth of the internal weld bead **204** is relatively small, gaps are prevented from occurring thereupon, further preventing dirt from accumulating in the gaps.

In addition, as shown in **Fig. 8****,** plural welding structures with intervals therebetween are allowed to be cast at the outer edge of each two contacting edges of the valve body **300,** whereby plural external weld beads **301** are formed thereon, wherein length of the external weld bead **301** is smaller than the length of the internal weld bead **204,** such that the overall structural strength is enhanced, and the service life of the product is lengthened.

More particularly, the external weld bead **301** is formed of plural welding structures with intervals therebetween. When the valve body **300** is tested by use of nitrogen detector, the nitrogen is easier to enter the inner space of the valve body **300,** whereby gas leakage thereof is easier to be detected for further welding patching repair. If the external weld bead **301** is cast in a manner of full welding, the contacting edges are usually filled up by the weld beads on the both sides, such that gas leakage thereof is uneasy to be detected by use of the nitrogen detector.

The welding method of the valve body **300** in accordance with the present invention comprises following steps:
a) providing a first plate **201** and a second plate **202** which are both in a U shape, and welding a cover plate **203** between one end of the first plate **201** and one end of the second plate **202** to form a hollow object to be welded **200;**
b) placing the object to be welded **200** on a moving seat **30** on the platform **10;** and
c) moving the moving seat **30** toward the welding gun **21,** such that the welding gun **21** is inserted into the object to be welded **200,** so as to weld the first plate **201** and the second plate **202** along two contacting edges thereof, whereby an internal weld bead **204** is formed on two sides within the object to be welded **200,** respectively, and the object to be welded **200** is thereby welded into a valve body **300** of a vacuum valve.

With such welding method, the valve body **300** is internally fully welded, whereby the structure is prevented from being damaged, and the structural strength and service life of the valve body **300** are improved. In addition, the welding structure at the outer edge of the first plate **201** and the second plate **202** is formed of plural external weld beads **301** with an intervals between each two external weld beads **301.**

The welding structure of the valve body **300** provided by the present invention is accomplished by use of the aforementioned apparatus and method, wherein the first plate **201** and the second plate **202** are correspondingly combined and fixed by internal welding, whereby the internal weld bead **204** is formed on the inner side of each two contacting edges, and the cover plate **203** is welded and fixed on one end of the first plate **201** and one end of the second plate **202.**

Further, the welding structure at the outer edge of each two contacting ends of the first and second plates **201, 202** is formed of plural external weld beads **301,** thereby enhancing the structural strength of the valve body **300.**

With the welding method provided by the present invention, the welding gun **21** is fixed, and the object to be welded **200** moves toward the welding gun **21** to be internally welded without solder, such that the welding operation within the narrow and hollow valve body **300** is allowed to be cast, thereby achieving an actual vacuum environment in the valve body **300.** Also, through the internal welding process, the valve body **300** is prevented from deforming to damage the structural strength thereof. Further, the outer edge of the valve body **300** is externally welded with plural intervals between the external weld beads **301,** the overall structural strength is enhanced, and the service life of the product is improved.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A welding structure of vacuum valve, comprising:
a first plate (201);
a second plate (202), having two lateral edges contacting and fixed with two laterals edges of the first plate (201) by internal welding, such that an internal weld bead (204) is formed at the inner edges of the second plate (202) and the first plate (201) contacting each other, respectively; and
a cover plate (203), welded to one end of the first plate (201) and one end of the second plate (202).

2. The welding structure of claim 1, wherein the first plate (201) and the second plate (202) are both in a U shape.

3. The welding structure of claim 1, wherein an outer edge of the first plate (201) and an outer edge of the second plate (202) contacting each other are welded to form plural external weld beads (301) with an interval between each two external weld beads (301).

4. A welding method of vacuum valve, comprising following steps:
a) providing a first plate (201) and a second plate (202), and welding a cover plate (203) between one end of the first plate (201) and one end of the second plate (202) to form a hollow object to be welded (200);
b) placing the object to be welded (200) on a moving seat (30) which reciprocates against a welding gun (21); and
c) moving the moving seat (30) toward the welding gun (21), such that the welding gun (21) is inserted into the object to be welded (200), so as to weld the first plate (201) and the second plate (202) along two contacting edges of the first plate (201) and the second plate (202), whereby an internal weld bead (204) is formed on two sides within the object to be welded (200), respectively, and the object to be welded (200) is thereby welded into a valve body (300) of a vacuum valve.

5. The welding method of claim 4, wherein, after the internal welding step in step c), outer edge of the first plate (201) contacting the second plate (202) is welded to form plural external weld beads (301) with an interval between each two external weld beads (301).

6. The welding method of claim 5, wherein the length of each external weld bead (301) is smaller than the length of each internal weld bead (204).

7. The welding method of claim 5, wherein the first plate (201) and the second plate (202) are both in a U shape.

8. A welding apparatus (100), comprising:
a platform (10);
an electric welding unit (20), disposed above the platform (10) and provided with a welding gun (21);
a moving seat (30), slidingly disposed on the platform (10) for the an object to be welded (200) to be placed thereon; and
a driving unit (40), for driving the moving seat (30) to reciprocate against the welding gun (21), such that the welding gun (21) is allowed to be inserted into the object to be welded (200) for internally welding.

9. The welding apparatus (100) of claim 8, wherein the platform (10) is provided with a pole (11) having a fixing seat (12), and a rod (22) is formed on the fixing seat (12), while the welding gun (21) is fixedly combined to one end of the rod (22).

10. The welding apparatus (100) of claim 9, wherein height of the fixing seat (12) is allowed to be axially adjusted along the pole (11).

11. The welding apparatus (100) of claim 8, wherein the platform (10) is provided with a rail (13) for the moving seat (30) to be slidingly disposed on the rail (13).

12. The welding apparatus (100) of claim 8, wherein the driving unit (40) has a motor (41) disposed on the platform (10), a thread rod (42) combined to the motor (41) and thus rotates with the motor (41), and a combining member (43) disposed between the moving seat (30) and the thread rod (42), such that the motor (41) drives the combining member (43) to axially move along the thread rod (42), so as to triggers the moving seat (30) to reciprocate.

13. The welding apparatus (100) of claim 11, wherein the moving seat (30) comprises a first sliding block (31) and a second sliding block (32) slidingly disposed on the rail (13) with an interval between the first sliding block (31) and the second sliding block (32), while two positioning blocks (33, 34) are disposed on the first sliding block (31) and the second sliding block (32), respectively, and a binding plate (35) is fastened between the two positioning blocks (33, 34), wherein the two positioning blocks (33, 34) are both in a U shape for receiving the object to be welded (200).

14. The welding apparatus (100) of claim 13, wherein the positioning block (33) of the two positioning blocks (33, 34) has a front edge provided with a nut (36) and a position limiting screw (37) which is screwed to the nut (36) for stopping against a front edge of the object to be welded (200).

15. The welding apparatus (100) of claim 13, wherein the two positioning blocks (33, 34) are screwed to the first sliding block (31) and the second sliding block (32), respectively.

16. The welding apparatus (100) of claim 8, wherein the object to be welded (200) is formed of a first plate (201) and a second plate (202) which are both in a U shape.
